# EUROPEAN PATENT APPLICATION

(11) **EP 4 418 402 A1**
(43) Date of publication of application: **21.08.2024**
(21) Application number: 22964629.4
(22) Date of filing: 20.12.2022
(51) Int. Cl.: H01M 10/0587, H01M 50/40

(54) **ELECTRODE ASSEMBLY, BATTERY CELL, BATTERY, AND ELECTRIC APPARATUS**

(71) Applicant: Contemporary Amperex Technology Co., Limited, Ningde, Fujian 352100 (CN)
(72) Inventor: LIAO, Guohang, Ningde Fujian 352100 (CN); WU, Zhiyang, Ningde Fujian 352100 (CN); WANG, Yiruo, Ningde Fujian 352100 (CN); LIN, Gang, Ningde Fujian 352100 (CN); HUANG, Jinghua, Ningde Fujian 352100 (CN)
(74) Representative: Gong, Jinping
(86) International application number: PCT/CN2022/140213
(87) International publication number: WO 2024/130525

(57) **Abstract**

Embodiments of this application provide an electrode assembly, a battery cell, a battery, and an electric apparatus. The electrode assembly includes a first electrode plate, a second electrode plate, and at least one separator for separating the first electrode plate from the second electrode plate. The first electrode plate and the second electrode plate have opposite polarities, and the first electrode plate, the second electrode plate, and at least one separator are wound together. A length of the at least one separator is L1, and a length of the first electrode plate is L2, where |L1-L2| ≤ 50 mm.

## Description

### TECHNICAL FIELD

This application relates to the field of battery technologies, and more specifically, to an electrode assembly, a battery cell, a battery, and an electric apparatus.

### BACKGROUND

Battery cells are widely used in electronic devices such as mobile phones, laptops, battery carts, electric vehicles, electric aircrafts, electric ships, electric toy cars, electric toy ships, electric toy aircrafts, and electric tools.

The battery cell includes an electrode assembly and an electrolyte. The electrode assembly includes a positive electrode plate, a negative electrode plate, and a separator. The separator is used for separating the positive electrode plate from the negative electrode plate. The positive electrode plate, the negative electrode plate, and the separator are usually wound together, but to ensure the insulation between the positive electrode plate and the negative electrode plate, the length of the separator is usually much longer than the length of the positive electrode plate and the length of the negative electrode plate, resulting in waste of the separator.

### SUMMARY

This application provides an electrode assembly, a battery cell, a battery, and an electric apparatus, to reduce waste of the separator and increase the energy density.

According to a first aspect, an embodiment of this application provides an electrode assembly, including a first electrode plate, a second electrode plate, and at least one separator for separating the first electrode plate from the second electrode plate. The first electrode plate and the second electrode plate have opposite polarities, and the first electrode plate, the second electrode plate, and at least one separator are wound together. A length of the at least one separator is L1, and a length of the first electrode plate is L2, where |L1-L2| ≤ 50 mm.

In the foregoing technical solution, a length difference between the separator and the first electrode plate can be limited to be within 50 mm, which, on the premise of basically ensuring insulation performance of the separator, can reduce waste of the separator, lower costs, reduce space occupied by the separator, and increase energy density.

In some embodiments, L1 and L2 satisfy |L1-L2| ≤ 30 mm. The length difference between the separator and the first electrode plate being limited to 30 mm can further reduce the waste of the separator, lower the costs, reduce the space occupied by the separator, and increase the energy density, on the premise of basically ensuring the insulation performance of the separator.

In some embodiments, L1 and L2 satisfy |L1-L2| ≤ 10 mm. The length difference between the separator and the first electrode plate being limited to 10 mm can further reduce the waste of the separator, lower the costs, reduce the space occupied by the separator, and increase the energy density, on the premise of basically ensuring the insulation performance of the separator.

In some embodiments, L1 = L2. The separator may substantially completely cover the first electrode plate to effectively separate the first electrode plate from the second electrode plate. A length of an ineffective region of the separator (that is, a region of the separator that is not used to separate the first electrode plate from the second electrode plate) is relatively short, thereby further reducing an amount of usage of the separator, lowering the costs, and increasing the energy density of the electrode assembly.

In some embodiments, L1 > L2.

The separator can cover the first electrode plate to effectively separate the first electrode plate from the second electrode plate. An excess design of the separator can improve safety performance of electrode assembly.

In some embodiments, the separator includes a first winding start section beyond a winding head end of the second electrode plate, and the first electrode plate includes a second winding start section beyond the winding head end of the second electrode plate. The first winding start section includes a winding head end of the separator, the second winding start section includes a winding head end of the first electrode plate, and a minimum distance between the winding head end of the separator and the winding head end of the first electrode plate is D1, D1 ≤ 20 mm.

In the foregoing technical solution, D1 being limited to be less than or equal to 20 mm can balance an amount of usage of the separator and an amount of usage of the first electrode plate, lower the costs, and increase the energy density of the electrode assembly. A minimum distance between the winding head end of the separator and the winding head end of the first electrode plate is less than or equal to 20 mm, and winding can almost simultaneously start for the first electrode plate and the separator, thereby saving winding time and improving winding efficiency.

In some embodiments, D1 ≤ 10 mm. D1 being limited to be less than or equal to 10 mm can further balance the amount of usage of the separator and the amount of usage of the first electrode plate, lower the costs, increase the energy density of the electrode assembly, save the winding time, and improve the winding efficiency.

In some embodiments, a length of the first winding start section is greater than a length of the second winding start section, and the first winding start section covers the winding head end of the first electrode plate.

The electrode assembly swells during charging and discharging so that the first winding start section is prone to being pulled, leading to a risk of exposure of the winding head end of the first electrode plate. In the foregoing technical solution, the length of the first winding start section is made longer than the length of the second winding start section, leaving a margin for the first winding start section. When the first winding start section is pulled, the first winding start section can cover the winding head end of the first electrode plate, reducing the risk of exposure of the winding head end of the first electrode plate and improving safety.

In some embodiments, the length of the first winding start section is equal to the length of the second winding start section, and the winding head end of the first electrode plate is aligned with the winding head end of the separator. The first winding start section can not only reduce the risk of exposure of the winding head end of the first electrode plate and improve safety, but also reduce the waste of the length of the first winding start section or waste of the length of the second winding start section, lower the costs, and increase the energy density of the electrode assembly.

In some embodiments, the separator includes a first winding tail section beyond a winding termination end of the second electrode plate, and the first electrode plate includes a second winding tail section beyond the winding termination end of the second electrode plate. The first winding tail section includes a winding termination end of the separator, the second winding tail section includes a winding termination end of the first electrode plate, and a distance between the winding termination end of the separator and the winding termination end of the first electrode plate is D2, D2 ≤ 20 mm.

In the foregoing technical solution, D2 being limited to be less than or equal to 20 mm can balance an amount of usage of the separator and an amount of usage of the first electrode plate, lower the costs, and increase the energy density of the electrode assembly. A minimum distance of less than or equal to 20 mm between the winding termination end of the separator and the winding termination end of the first electrode plate can cause the separator and the first electrode plate to stop winding almost simultaneously, reducing the total duration of winding, saving winding time, and improving winding efficiency.

In some embodiments, D2 ≤ 10 mm. D2 being limited to be less than or equal to 10 mm can further balance the amount of usage of the separator and the amount of usage of the first electrode plate, lower the costs, increase the energy density of the electrode assembly, save the winding time, and improve the winding efficiency.

In some embodiments, a length of the first winding tail section is greater than a length of the second winding tail section, and the first winding tail section covers the winding termination end of the first electrode plate.

The electrode assembly swells during charging and discharging so that the first winding tail section is prone to being pulled, leading to a risk of exposure of the winding termination end of the first electrode plate. In the foregoing technical solution, the length of the first winding tail section is made longer than the length of the second winding tail section, leaving a margin for the first winding tail section. When the first winding tail section is pulled, the first winding tail section can cover the winding termination end of the first electrode plate, reducing the risk of exposure of the winding termination end of the first electrode plate and improving safety.

In some embodiments, the length of the first winding tail section is equal to the length of the second winding tail section, and the winding termination end of the first electrode plate is aligned with the winding termination end of the separator. The first winding tail section can not only reduce the risk of exposure of the winding termination end of the first electrode plate and improve safety, but also reduce the waste of the length of the first winding tail section or waste of the length of the second winding tail section, lower the costs, and increase the energy density of the electrode assembly.

In some embodiments, there are two separators, and the two separators are equal in length. The two separators can cover the second electrode plate from two sides to separate the second electrode plate from the first electrode plate, thereby reducing the risk of short circuit between the second electrode plate and the first electrode plate. The two separators are equal in length, which can reduce the amount of usage of each separator, lower the costs, and increase the energy density of the electrode assembly.

In some embodiments, the first electrode plate, the separator, and the second electrode plate are wound to form a straight region and two bending regions, the two bending regions being located on two sides of the straight region in a first direction, respectively.

In some embodiments, the first electrode plate includes a second winding start section beyond the winding head end of the second electrode plate. The second winding start section is entirely located in the straight region.

In the technical solution, the second winding start section is clamped in the straight region, which can improve stability of the second winding start section, reduce a risk of deviation of the second winding start section when the electrode assembly is subjected to external impact, and improve safety.

In some embodiments, the first electrode plate includes a second winding start section beyond the winding head end of the second electrode plate. At least a portion of the second winding start section is located in the bending region. The second winding start section being bent in the bending region can reduce space occupied by the second winding start section in the first direction, thereby contributing to increasing energy density of the electrode assembly.

In some embodiments, the second winding start section includes a first portion, a second portion, and a third portion that are consecutively arranged, where the first portion includes the winding head end of the first electrode plate, the third portion has a junction aligned with the winding head end of the second electrode plate, and the third portion extends from the junction; and both the first portion and the third portion are located in the straight region, and the second portion is located in the bending region and configured to connect the first portion and the third portion. The second winding start section is bent into a double-layer structure to reduce space occupied by the second winding start section in the first direction, thereby increasing energy density of the electrode assembly.

In some embodiments, the second portion supports portions of the first electrode plate and the second electrode plate that are in the bending region and located outward of the second portion.

The second portion can provide supporting force for the portions of the first electrode plate and the second electrode plate that are in the bending region and located outward of the second portion, so that the portions of the first electrode plate and the second electrode plate in the bending region are more compact, and the gap between the portion of the first electrode plate in the bending region and the portion of the second electrode plate in the bending region is not easily enlarged due to external force, thereby reducing a risk of lithium precipitation.

In some embodiments, the first electrode plate further includes a unilateral reaction section continuously arranged with the third portion, the unilateral reaction section and the third portion are separated at the junction, and only an active substance layer on an outer surface of the unilateral reaction section is opposite to an active substance layer of the second electrode plate. At least a portion of the unilateral reaction section is stacked outward of the second winding start section, and there is no separator or second electrode plate between the second winding start section and the portion of the unilateral reaction section stacked outward of the second winding start section.

The unilateral reaction section is adjacent to the second winding start section, and the separator between the unilateral reaction section and the second winding start section can be omitted, thereby saving an amount of usage of the separator and increasing the energy density of the electrode assembly. In addition, the unilateral reaction section and the second winding start section have a same polarity and are arranged adjacent to each other, which can reduce the risk of short circuit and improve safety.

In some embodiments, the portion of the unilateral reaction section stacked outward of the second winding start section is in contact with the second winding start section.

The second winding start section can support the unilateral reaction section, and the supporting force provided by the second portion may be transmitted to the unilateral reaction section first and then to the second electrode plate through the unilateral reaction section, so that the second winding start section can better support the unilateral reaction section and the second electrode plate.

In some embodiments, the second electrode plate includes a third winding start section extending from the winding head end of the second electrode plate, and the third winding start section is entirely located in the straight region. In a thickness direction of the third winding start section, the third winding start section does not overlap with the first portion.

With the third winding start section not overlapping with the first portion, the two can share the same space in the thickness direction, thereby improving space utilization and increasing the energy density of the electrode assembly. In addition, the end of the third winding start section is not likely to press the first portion, and the end of the first portion is not likely to press the third winding start section, so that stress concentration can be reduced, reducing the risk of electrode plate fracture caused by stress concentration.

In some embodiments, in the first direction, the third winding start section is spaced apart from the first portion. The third winding start section being spaced apart from the first portion reduces the risk of overlapping the third winding start section with the first portion.

In some embodiments, in the first direction, a minimum distance between the third winding start section and the first portion is greater than or equal to a dimension of the first portion.

In the winding process of the electrode assembly, due to process errors, there may be a significant dimensional deviation in the first direction in the first portion. In the foregoing technical solution, the minimum distance between the third winding start section and the first portion is defined based on the dimension of the first portion, which can effectively reduce the risk of overlapping of the third winding start section with the first portion.

In some embodiments, in the first direction, the distance between the third winding start section and the first portion is L3, L3 being 5-20 mm.

During charging and discharging, the electrode assembly swells and deforms. If L3 is too small, there may be an overlap between the third winding start section and the first portion. A greater L3 indicates smaller dimensions of the third winding start section and the first portion in the first direction. If L3 is too large, space waste happens, and the energy density of the electrode assembly is decreased. With L3 of 5-20 mm, the risk of overlapping of the third winding start section with the first portion can be reduced, and loss of energy density of the electrode assembly can be reduced.

In some embodiments, the winding termination end of the first electrode plate is located in the bending region.

In the process of charging and discharging the battery cell, the straight region of the electrode assembly swells greatly, and the straight region is susceptible to mutual pressure with the housing. If the winding termination end of the first electrode plate is disposed in the straight region, the winding termination end of the first electrode plate is prone to stress concentration, leading to risks such as the second electrode plate being broken by the winding termination end of the first electrode plate, and lithium precipitation. In the foregoing technical solution, the winding termination end of the first electrode plate being disposed in the bending region can reduce stress concentration, reduce risks such as fracture of the second electrode plate and lithium precipitation, and improve safety.

In some embodiments, the first electrode plate includes the second winding tail section beyond the winding termination end of the second electrode plate, the second winding tail section including the winding termination end of the first electrode plate. The second winding tail section is entirely located in the bending region. The second winding tail section being entirely located in the bending region can reduce the length of the second winding tail section and reduce material waste.

In some embodiments, the winding termination end of the second electrode plate is located in the bending region.

The winding termination end of the second electrode plate being disposed in the bending region can reduce stress concentration, reduce the risk of the first electrode plate being broken by the winding termination end of the second electrode plate, reduce lithium precipitation, and improve safety.

In some embodiments, the separator includes the first winding tail section beyond the winding termination end of the second electrode plate, and the first winding tail section includes the winding termination end of the separator. The electrode assembly further includes a binding member, the binding member being connected to the separator and used for binding the first winding tail section. The binding member can bind the first winding tail section to reduce the risk of scattering of the separator.

In some embodiments, the first electrode plate includes the second winding tail section beyond the winding termination end of the second electrode plate, the second winding tail section including the winding termination end of the first electrode plate. The first winding tail section and the second winding tail section are located in the same bending region. One end of the binding member is located outward of and connected to the first winding tail section, and another end of the binding member exceeds the winding termination end of the first electrode plate and the winding termination end of the separator and is connected to the separator. The binding member can connect the first winding tail section to other portions of the separator to bind the first winding tail section and reduce the risk of scattering of the separator.

In some embodiments, another end of the binding member is located in the straight region. The straight region is relatively flat, which facilitates the connection between the binding member and the separator and increases the connection strength between the binding member and the separator.

In some embodiments, another end of the binding member is located in another of the bending regions. With the two ends of the binding member disposed in the bending regions, the pressure applied to the ends of the binding member when the electrode assembly swells can be reduced, which reduces stress concentration, reduces the risk of the electrode plate being broken, reduces lithium precipitation, and improves safety.

In some embodiments, the electrode assembly further includes an identification label, the identification label being disposed on a surface of the binding member facing away from the straight region.

The production equipment of the electrode assembly can obtain relevant information about the electrode assembly by reading the identification label, which helps to realize automatic production of electrode assemblies. Compared with a solution of disposing the identification label on the separator, disposing the identification label on the binding member can reduce the risk of damage to the separator.

In some embodiments, another end of the binding member exceeds a center line of the straight region, the center line being parallel to a winding axial direction of the electrode assembly.

In some embodiments, two edges of the binding member both exceed the first electrode plate in the winding axial direction of the electrode assembly. The binding member can cover the first electrode plate to reduce the risk of exposure of the active substance layer of the first electrode plate and improve safety.

According to a second aspect, an embodiment of this application provides a battery cell including a housing and the electrode assembly according to any one of the embodiments of the first aspect, the electrode assembly being accommodated in the housing.

According to a third aspect, an embodiment of this application provides a battery including a plurality of battery cells according to the second aspect.

According to a fourth aspect, an embodiment of this application provides an electric apparatus including the battery according to the third aspect, where the battery is configured to supply electrical energy.

### BRIEF DESCRIPTION OF DRAWINGS

To describe the technical solutions of the embodiments of this application more clearly, the following briefly describes the accompanying drawings required for describing the embodiments of this application. Apparently, the accompanying drawings described below show merely some embodiments of this application, and persons of ordinary skill in the art may still derive other drawings from the accompanying drawings without creative efforts.
FIG. 1 is a schematic structural diagram of a vehicle according to some embodiments of this application;
FIG. 2 is a schematic exploded view of a battery according to some embodiments of this application;
FIG. 3 is a schematic exploded view of a battery cell according to some embodiments of this application;
FIG. 4 is a schematic structural diagram of an electrode assembly according to some embodiments of this application;
FIG. 5 is a schematic structural diagram of the electrode assembly shown in FIG. 4 after being flattened;
FIG. 6 is a schematic diagram of a winding device according to some embodiments of this application;
FIG. 7 is another schematic diagram of a winding device according to some embodiments of this application;
FIG. 8 is a schematic structural diagram of an electrode assembly according to some embodiments of this application;
FIG. 9 is a schematic structural diagram of the electrode assembly shown in FIG. 8 after being flattened;
FIG. 10 is a local schematic diagram of the electrode assembly shown in FIG. 4;
FIG. 11 is a schematic diagram of the electrode assembly shown in FIG. 10 in a flattened state;
FIG. 12 is another local schematic diagram of the electrode assembly shown in FIG. 4;
FIG. 13 is a schematic diagram of the electrode assembly shown in FIG. 12 in a flattened state;
FIG. 14 is a schematic diagram of a three-dimensional structure of an electrode assembly according to some embodiments of this application;
FIG. 15 is a schematic cross-sectional diagram of the electrode assembly shown in FIG. 12 along a line A-A;
FIG. 16 is a local schematic diagram of an electrode assembly according to some other embodiments of this application; and
FIG. 17 is a schematic structural diagram of an electrode assembly according to some other embodiments of this application.

The accompanying drawings are not drawn to scale.

### DESCRIPTION OF EMBODIMENTS

To make the objectives, technical solutions, and advantages of the embodiments of this application clearer, the following clearly and completely describes the technical solutions in the embodiments of this application with reference to the accompanying drawings in the embodiments of this application. Apparently, the described embodiments are some but not all embodiments of this application. All other embodiments obtained by persons of ordinary skill in the art based on the embodiments of this application without creative efforts shall fall within the protection scope of this application.

Unless otherwise defined, all technical and scientific terms used herein shall have the same meanings as commonly understood by those skilled in the art to which this application relates. The terms used in the specification of this application are intended to merely describe the specific embodiments rather than to limit this application. The terms "include", "comprise", and any variations thereof in the specification and claims of this application as well as the foregoing description of drawings are intended to cover non-exclusive inclusions. In the specification, claims, or accompanying drawings of this application, the terms "first", "second", and the like are intended to distinguish between different objects rather than to indicate a particular order or relative importance.

In the descriptions of this application, it should be understood that the orientations or positional relationships indicated by the terms "center", "transverse", "length", "width", "upper", "lower", "front", "rear", "left", "right", "perpendicular", "horizontal", "top", "bottom", "inside", "outside", "axial", "radial", "circumferential", and the like are based on the orientations or positional relationships shown in the accompanying drawings. These terms are merely for ease and brevity of description of this application rather than indicating or implying that the apparatuses or components mentioned must have specific orientations or must be constructed or manipulated according to specific orientations, and therefore shall not be construed as any limitations on this application.

In the description of this application, it should be noted that unless otherwise specified and defined explicitly, the terms "mounting", "connection", "join", and "attachment" should be understood in their general senses. For example, the terms may be a fixed connection, a detachable connection, or an integrated connection, or may be a direct connection, an indirect connection via an intermediate medium, or internal communication between two elements. A person of ordinary skills in the art can understand specific meanings of these terms in this application as appropriate to specific situations.

In this specification, reference to "embodiment" means that specific features, structures or characteristics described with reference to the embodiment may be incorporated in at least one embodiment of this application. The word "embodiment" appearing in various places in the specification does not necessarily refer to the same embodiment or an independent or alternative embodiment that is exclusive of other embodiments. It is explicitly or implicitly understood by persons skilled in the art that the embodiments described herein may be combined with other embodiments.

The term "and/or" in this specification is only an associative relationship for describing associated objects, indicating that three relationships may be present. For example, A and/or B may indicate three cases: presence of only A; presence of both A and B; and presence of only B. In addition, the character "/" in this specification generally indicates an "or" relationship between contextually associated objects.

In this application, "a plurality of" means more than two (inclusive). Similarly, "a plurality of groups" means more than two (inclusive) groups, and "a plurality of pieces" means more than two (inclusive) pieces.

The battery cell in the application may include a lithium-ion secondary battery cell, a lithium-ion primary battery cell, a lithium-sulfur battery cell, a sodium-lithium-ion battery cell, a sodium-ion battery cell, a magnesium-ion battery cell, or the like. This is not limited in the embodiments of this application. The battery cell may be cylindrical, flat, rectangular, or another shape, and this is also not limited in the embodiments of this application. Battery cells are typically divided into three types by packaging method: cylindrical cell, prismatic cell, and pouch cell. The type of battery is not limited in the embodiments of this application either.

The battery cell includes an electrode assembly and an electrolyte. The electrode assembly includes a positive electrode plate, a negative electrode plate, and a separator. Working of the battery cell mainly relies on migration of metal ions between the positive electrode plate and the negative electrode plate. The positive electrode plate includes a positive electrode current collector and a positive electrode active substance layer, where a surface of the positive electrode current collector is coated with the positive electrode active substance layer. A current collector not coated with the positive electrode active substance layer protrudes from a current collector already coated with the positive electrode active substance layer, and the current collector not coated with the positive electrode active substance layer serves as a positive electrode tab. A lithium-ion battery is used as an example, for which, the positive electrode current collector may be made of aluminum and the positive electrode active substance may be lithium cobaltate, lithium iron phosphate, ternary lithium, lithium manganate, or the like. The negative electrode plate includes a negative electrode current collector and a negative electrode active substance layer, where a surface of the negative electrode current collector is coated with the negative electrode active substance layer. A current collector not coated with the negative electrode active substance layer protrudes from a current collector already coated with the negative electrode active substance layer, and the current collector not coated with the negative electrode active substance layer serves as a negative electrode tab. The negative electrode current collector may be made of copper, and the negative electrode active substance may be carbon, silicon, or the like. To allow a large current to pass through without any fusing, multiple positive electrode tabs are provided and stacked together, and multiple negative electrode tabs are provided and stacked together. A material of the separator may be PP (polypropylene), PE (polyethylene), or the like. The electrode assembly may be a wound structure or a stacked structure, but the embodiments of this application are not limited thereto. For the development of battery technologies, many design factors need to be considered, for example, performance parameters such as energy density, cycle life, discharge capacity, and charge and discharge rate, as well as safety of the battery.

The battery mentioned in the embodiments of this application is a single physical module that includes one or more battery cells for providing a higher voltage and capacity. For example, the battery mentioned in this application may include a battery module, a battery pack, or the like. A battery typically includes a box configured to enclose one or more battery cells. The box can prevent liquids or other foreign matter from affecting charging or discharging of the battery cell.

The separator features electronic insulation and is disposed between the positive electrode plate and the negative electrode plate. A main function of the separator is to prevent the positive electrode plate and the negative electrode plate from coming into contact and causing internal short circuit in the electrode assembly. The separator is provided with a large quantity of through micropores to ensure free passage of electrolyte ions. In particular, the separator has good permeability to lithium ions. For example, the separator may include a separation substrate and a functional layer located on a surface of the separation substrate. The separator substrate may be at least one of polypropylene, polyethylene, ethylene-propylene copolymer, polybutylene terephthalate, and the like. The functional layer may be a mixture layer of ceramic oxide and a binder.

The separator plays a very important role in the electrode assembly. In related technologies, a length of the separator is much longer than lengths of the electrode plates, and the separator has a problem of excessive length, which leads to waste of separators and increased costs of battery cells. In addition, the excessive separator occupies space and affects energy density of the electrode assembly.

In view of this, this application proposes a technical solution, which reduces the length difference between the separator and the electrode plates, thereby reducing the amount of usage of the separator, lowering the costs, and increasing the energy density of the electrode assembly.

For ease of description, the electric apparatus being a vehicle is used as example for description of the following embodiments.

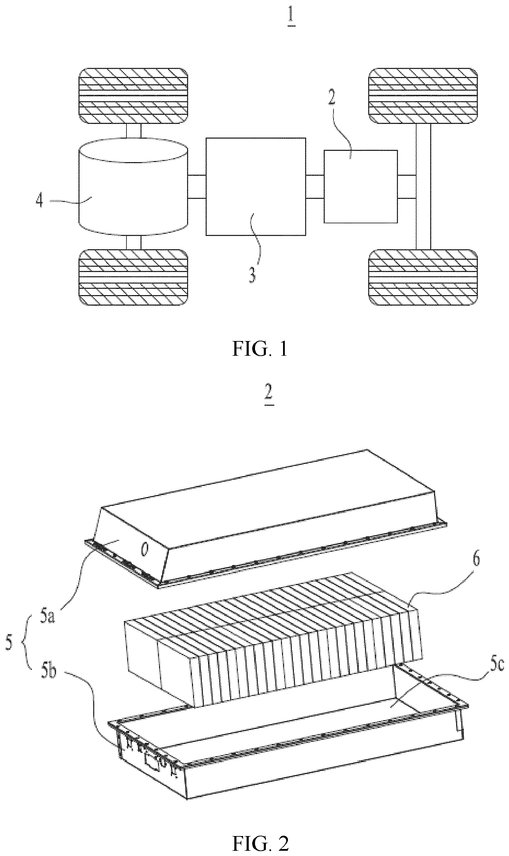

FIG. 1 is a schematic structural diagram of a vehicle according to some embodiments of this application. As shown in FIG. 1, the vehicle 1 is provided with a battery 2 inside, and the battery 2 may be disposed at the bottom or in the front or at the rear of the vehicle 1. The battery 2 may be configured to supply power to the vehicle 1. For example, the battery 2 may be used as an operational power source for the vehicle 1.

The vehicle 1 may further include a controller 3 and a motor 4, where the controller 3 is configured to control the battery 2 to supply power to the motor 4, for example, to satisfy power needs of start, navigation, and driving of the vehicle 1.

In some embodiments of this application, the battery 2 can be used as not only the operational power supply for the vehicle 1 but also a driving power supply for the vehicle 1, replacing all or part of the fossil fuel or the natural gas to provide driving power for the vehicle 1.

FIG. 2 is a schematic exploded view of a battery according to some embodiments of this application. As shown in FIG. 2, the battery 2 includes a box 5 and a battery cell 6, and the battery cell 6 is accommodated in the box 5.

The box 5 is configured to accommodate battery cells 6, and the box 5 may have various structures. In some embodiments, the box 5 may include a first box portion 5a and a second box portion 5b. The first box portion 5a and the second box portion 5b fit together to jointly define an accommodating space 5c for accommodating the battery cells 6. The second box portion 5b may be a hollow structure with an opening formed at an end, the first box portion 5a is a plate-shaped structure, and the first box portion 5a covers the opening side of the second box portion 5b so as to form the box 5 having the accommodating space 5c; and the first box portion 5a and the second box portion 5b may alternatively both be a hollow structure with an opening formed at an end, and the opening side of the first box portion 5a is engaged with the opening side of the second box portion 5b so as to form the box 5 having the accommodating space 5c. Certainly, the first box portion 5a and the second box portion 5b may be in various shapes, such as cylinder and cuboid.

In order to improve the airtightness after the connection of the first box portion 5a and the second box portion 5b, a sealing element such as sealing gum and sealing ring may also be disposed between the first box portion 5a and the second box portion 5b.

Assuming that the first box portion 5a fits on a top of the second box portion 5b, the first box portion 5a may also be referred to as an upper cover, and the second box portion 5b may also be referred to as a lower box.

In the battery 2, there are a plurality of battery cells 6. The plurality of battery cells 6 may be connected in series, parallel, or series-parallel, where being connected in series-parallel means a combination of series and parallel connections of the plurality of battery cells 6. The multiple battery cells 6 may be directly connected in series, parallel, or series-parallel, and then an entirety of the plurality of battery cells 6 is accommodated in the box 5; or certainly, the plurality of battery cells 6 may be connected in series, parallel, or series-parallel first to form a battery module and then a plurality of battery modules are connected in series, parallel, or series-parallel to form an entirety, which is accommodated in the box 5.

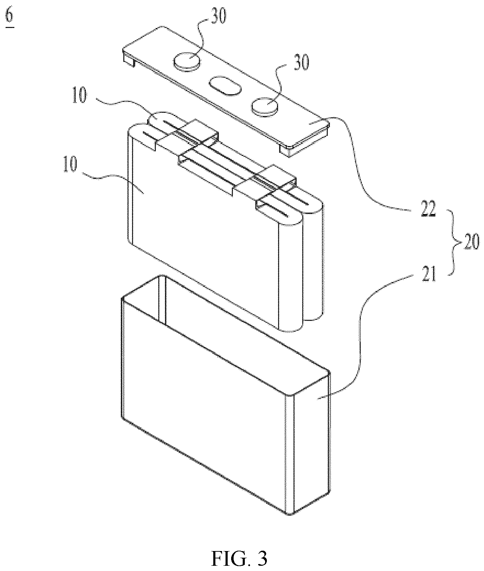

FIG. 3 is a schematic exploded view of a battery cell according to some embodiments of this application.

The battery cell 6 refers to a smallest element constituting the battery 2. As shown in FIG. 3, the battery cell 6 includes a housing 20, an electrode assembly 10, and other functional components, and the electrode assembly 10 is accommodated in the housing 20.

In some embodiments, the housing 20 includes an end cover 22 and a shell 21.

The end cover 22 refers to a component that covers an opening of the shell 21 to isolate an internal environment of the battery cell 6 from an external environment. The shape of the end cover 22 is not limited and may be adapted to the shape of the shell 21 to fit the shell 21. Optionally, the end cover 22 may be made of a material with a specified hardness and strength (for example, aluminum alloy), so that the end cover 22 is less likely to deform when subjected to pressure and collision, allowing the battery cell 6 to have higher structural strength and enhanced safety performance. The end cover 22 may be provided with functional components such as an electrode terminal 30. The electrode terminal 30 may be configured to be electrically connected to the electrode assembly 10 for outputting or inputting electrical energy of the battery cell 6.

In some embodiments, the end cover 22 may further be provided with a pressure relief mechanism for releasing internal pressure when the internal pressure or a temperature of the battery cell 6 reaches a threshold. The end cover 22 may also be made of various materials, such as copper, iron, aluminum, stainless steel, aluminum alloy, and plastic, which are not particularly limited in the embodiments of this application.

In some embodiments, an insulator may also be provided at an inner side of the end cover 22. The insulator may be configured to isolate an electrically connected component in the shell 21 from the end cover 22 to reduce a risk of short circuit. For example, the insulator may be made of plastic, rubber, or the like.

The shell 21 is an assembly configured to form an internal environment of the battery cell 6 together with the end cover 22, where the formed internal environment may be configured to accommodate the electrode assembly 10, an electrolyte, and other components. The shell 21 and the end cover 22 may be separate components, an opening may be provided on the shell 21, and the end cover 22 covers the opening to form the internal environment of the battery cell 6. Without limitation, the end cover 22 and the shell 21 may alternatively be integrated. Specifically, the end cover 22 and the shell 21 may form a shared connection surface before other components are disposed inside the housing, and then the shell 21 is covered with the end cover 22 when inside of the shell 21 needs to be enclosed. The shell 21 may be a variety of shapes and sizes, such as a cuboid, a cylinder, and a hexagonal prism. Specifically, a shape of the shell 21 may be determined according to a specific shape and size of the electrode assembly 10. The shell 21 may be made of various materials, such as copper, iron, aluminum, stainless steel, aluminum alloy, and plastic, which are not particularly limited in the embodiments of this application.

The electrode assembly 10 is a component capable of electrochemical reactions. The shell 21 may include one or more electrode assemblies 10. The electrode assembly 10 is mainly formed by winding a positive electrode plate and a negative electrode plate, and a separator is generally provided between the positive electrode plate and the negative electrode plate. Portions of the positive electrode plate and the negative electrode plate with active substances constitute a body portion of the electrode assembly 10, while portions of the positive electrode plate and the negative electrode plate without active substances each constitute a tab. A positive electrode tab and a negative electrode tab may both be located at one end of the body portion or be located at two ends of the body portion respectively. During charging and discharging of the battery cell 6, a positive electrode active substance and a negative electrode active substance react with an electrolyte, and the tabs are connected to electrode terminals 30 to form a current loop.

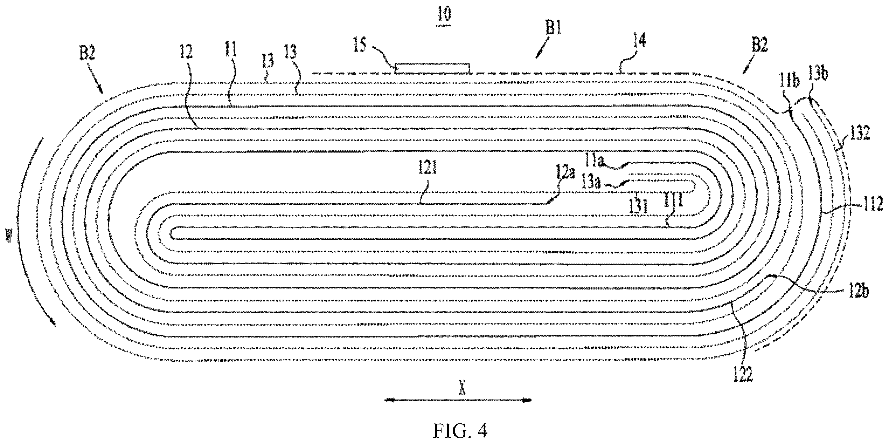

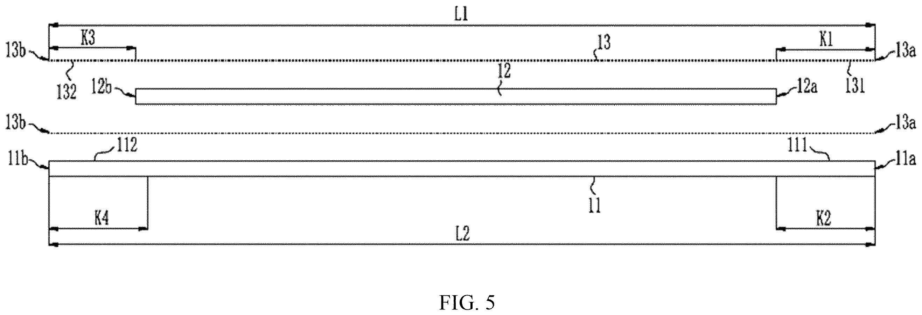

FIG. 4 is a schematic structural diagram of an electrode assembly according to some other embodiments of this application; and FIG. 5 is a schematic structural diagram of the electrode assembly shown in FIG. 4 after being flattened.

As shown in FIG. 4 and FIG. 5, an embodiment of this application provides an electrode assembly 10 including a first electrode plate 11, a second electrode plate 12, and a separator 13 for separating the first electrode plate 11 from the second electrode plate 12. The first electrode plate 11 and the second electrode plate 12 have opposite polarities. The first electrode plate 11, the second electrode plate 12, and at least one separator 13 are wound together. A length of the at least one separator 13 is L1, and a length of the first electrode plate 11 is L2, where |L1-L2| ≤ 50 mm.

The electrode assembly 10 is of a wound structure, which may be of various shapes. For example, the electrode assembly 10 can take the form of a cylinder, a flat body, a prism (such as a triangular prism, a quadrangular prism, or a hexagonal prism) or other shapes.

One of the first electrode plate 11 and the second electrode plate 12 is a positive electrode plate, and the other is a negative electrode plate.

The separator 13 includes an insulating film. The insulating film has a large quantity of through micropores, which can ensure the free passage of metal ions. For example, the insulating film has a good permeability to lithium ions, and basically cannot block passage of lithium ions.

In this embodiment, the length of the separator 13 refers to a length of the separator 13 in a flattened state, and a length of the first electrode plate 11 refers to a length of the first electrode plate 11 in a flattened state. Illustratively, in the flattened state, the separator 13 is generally a rectangular sheet, and the length of the separator 13 is a length of the rectangular sheet.

One or more separators 13 may be provided. For example, two separators 13 can be provided. In this application, one separator 13, the first electrode plate 11, the other separator 13, and the second electrode plate 12 can be stacked sequentially, and then wound for two or more turns to form a wound structure.

The length of the at least one separator 13 is L1. In some examples, there is a single separator 13, and the length of the single separator 13 is L1. In some other examples, there are two separators 13, and the length of one separator 13 is L1, while the length of another separator 13 is not limited. For example, the length of the another separator 13 may be greater than, less than, or equal to L1.

In this embodiment of this application, L1 may be greater than, less than, or equal to L2, as long as the separator 13 can separate the first electrode plate 11 from the second electrode plate 12.

The value of |L1-L2| may be 50 mm, 40 mm, 30 mm, 20 mm, 10 mm, 5 mm, 2 mm, 1 mm, or 0 mm.

The length difference between the separator 13 and the first electrode plate 11 is limited to be within 50 mm, which, on the premise of basically ensuring the insulation performance of the separator 13, can reduce the waste of the separator 13, lower the costs, reduce the space occupied by the separator 13, and increase the energy density.

In some embodiments, when L1-L2 ≥ 0, a larger value of L1-L2 indicates a greater amount of usage of the separator 13. If the value of L1-L2 is too large, the amount of usage of the separator 13 is too large, resulting in high costs and low energy density of the electrode assembly 10. When L1-L2 < 0, a smaller value of L1-L2 indicates a smaller region of the first electrode plate 11 covered by the separator 13. If the value of L1-L2 is too small, there is a risk of insulation failure, resulting in a short circuit between the first electrode plate 11 and the second electrode plate 12, causing potential safety hazards.

|L1-L2| is limited to be less than or equal to 50 mm, which, on the premise of implementing the insulation function of the separator 13, can reduce the amount of usage of the separator 13, lower the costs, and increase the energy density of the electrode assembly 10.

In some embodiments, L1 and L2 satisfy |L1-L2| ≤ 30 mm. The length difference between the separator 13 and the first electrode plate 11 is limited to be within 30 mm, which, on the premise of basically ensuring the insulation performance of the separator 13, can further reduce the waste of the separator 13, lower the costs, reduce the space occupied by the separator 13, and increase the energy density.

In some embodiments, L1 and L2 satisfy |L1-L2| ≤ 10 mm. The length difference between the separator 13 and the first electrode plate 11 is limited to be within 10 mm, which, on the premise of basically ensuring the insulation performance of the separator 13, can further reduce the waste of the separator 13, lower the costs, reduce the space occupied by the separator 13, and increase the energy density.

In some embodiments, L1 and L2 satisfy |L1-L2| ≤ 3 mm.

In some embodiments, L1 = L2. The separator 13 may substantially completely cover the first electrode plate 11 to effectively separate the first electrode plate 11 from the second electrode plate 12. A length of an ineffective region of the separator 13 (that is, a region of the separator 13 that is not used to separate the first electrode plate 11 from the second electrode plate 12) is relatively short, thereby further reducing an amount of usage of the separator 13, lowering the costs, and increasing the energy density of the electrode assembly 10.

In some embodiments, the separator 13 includes a first winding start section 131 beyond a winding head end 12a of the second electrode plate, and the first electrode plate 11 includes a second winding start section 111 beyond the winding head end 12a of the second electrode plate.

When the first electrode plate 11 is in a flattened state, two ends of the first electrode plate 11 in its own length direction are a winding head end 11a of the first electrode plate and a winding termination end 11b of the first electrode plate. In a wound state, the winding head end 11a of the first electrode plate is close to the interior of the electrode assembly 10, and the first electrode plate starts winding at the winding head end 11a; and the winding termination end 11b of the first electrode plate is close to the exterior of the electrode assembly 10, and the first electrode plate stops winding at the winding termination end 11b.

When the second electrode plate 12 is in a flattened state, two ends of the second electrode plate 12 in its own length direction are a winding head end 12a of the second electrode plate and a winding termination end 12b of the second electrode plate. In a wound state, the winding head end 12a of the second electrode plate is close to the interior of the electrode assembly 10, and the second electrode plate starts winding at the winding head end 12a; and the winding termination end 12b of the second electrode plate is close to the exterior of the electrode assembly 10, and the second electrode plate stops winding at the winding termination end 12b.

When the separator 13 is in a flattened state, two ends of the separator 13 in its own length direction are a winding head end 13a of the separator and a winding termination end 13b of the separator. In a wound state, the winding head end 13a of the separator is close to the exterior of the electrode assembly 10, and the separator starts winding at the winding head end 13a; and the winding termination end 13b of the separator is close to the exterior of the electrode assembly 10, and the separator stops winding at the winding termination end 13b.

The first winding start section 131 is a portion of the separator 13 beyond the winding head end 12a of the second electrode plate. A length K1 of the first winding start section 131 is a dimension of the first winding start section 131 in a length direction of the separator 13 when the separator 13 is in the flattened state.

The second winding start section 111 is a portion of the first electrode plate 11 beyond the winding head end 12a of the second electrode plate. A length K2 of the second winding start section 111 is a dimension of the second winding start section 111 in a length direction of the first electrode plate 11 when the first electrode plate 11 is in the flattened state.

In this embodiment of this application, the length K1 of the first winding start section 131 and the length K2 of the second winding start section 111 are not limited. In other words, the length K1 of the first winding start section 131 may be greater than, less than, or equal to the length K2 of the second winding start section 111.

In this embodiment of this application, both the first electrode plate 11 and the separator 13 exceed the winding head end 12a of the second electrode plate, and the separator 13 can insulate the winding head end 12a of the second electrode plate from the first electrode plate 11, thereby reducing the risk of short circuit.

In some embodiments, the first electrode plate 11 is a negative electrode plate, and the second electrode plate 12 is a positive electrode plate. The first electrode plate 11 exceeds the winding head end 12a of the second electrode plate, and the first electrode plate 11 can receive metal ions released from the second electrode plate 12, thereby reducing the risk of metal ion precipitation.

In some embodiments, the first winding start section 131 includes the winding head end 13a of the separator, the second winding start section 111 includes the winding head end 11a of the first electrode plate, and the minimum distance between the winding head end 13a of the separator and the winding head end 11a of the first electrode plate is D1, D1 ≤ 20 mm.

After the electrode assembly 10 is disassembled, the first electrode plate 11, the separator 13, and the second electrode plate 12 are flattened, and their relative positions remain unchanged. At this point, in the length direction of the separator 13, the minimum distance between the winding head end 13a of the separator and the winding head end 11a of the first electrode plate is D1.

The first winding start section 131 extends from the winding head end 13a of the separator to a position at a junction between the separator 13 and the winding head end 12a of the second electrode plate, and the second winding start section 111 extends from the winding head end 11a of the first electrode plate to a position at a junction between the first electrode plate 11 and the winding head end 12a of the second electrode plate. In other words, the absolute value of a difference between the length K1 of the first winding start section 131 and the length K2 of the second winding start section 111 is D1.

D1 being limited to be less than or equal to 20 mm can balance an amount of usage of the separator 13 and an amount of usage of the first electrode plate 11, lower the costs, and increase the energy density of the electrode assembly 10. The minimum distance between the winding head end 13a of the separator and the winding head end 11a of the first electrode plate is less than or equal to 20 mm, and winding can almost simultaneously start for the first electrode plate 11 and the separator 13, thereby saving winding time and improving winding efficiency.

In some embodiments, when the separator 13 exceeds the winding head end 11a of the first electrode plate, a greater D1 indicates a greater length K1 of the first winding start section 131 and a greater amount of usage of the separator 13. If D1 is too large, serious waste of the separator 13 happens, increasing the costs and decreasing the energy density. When the first electrode plate 11 exceeds the winding head end 13a of the separator, a greater D1 indicates a greater length K2 of the second winding start section 111 and a greater amount of usage of the first electrode plate 11. If D1 is too large, serious waste of the first electrode plate 11 happens, increasing the costs and decreasing the energy density.

D1 being limited to be less than or equal to 20 mm can balance an amount of usage of the separator 13 and an amount of usage of the first electrode plate 11, lower the costs, and increase the energy density of the electrode assembly 10.

In some embodiments, the first electrode plate 11, the separator 13, and the second electrode plate 12 may be wound using a winding shaft 7. The winding shaft 7 may include two winding half shafts 71 arranged oppositely, and the winding half shafts 71 may be semi-cylindrical, semi-elliptical, or of other shapes.

In preparation of the electrode assembly 10, the first winding start section 131 and the second winding start section 111 may be clamped between the two winding half shafts 71. Then, the two winding half shafts 71 rotate to wind the first electrode plate 11 and the separator 13. Simultaneously, the second electrode plate 12 is moved and wound outward of the two winding half shafts 71 under the friction between the second electrode plate 12 and the separator 13.

In the embodiments of this application, D1 being limited to be less than or equal to 20 mm can reduce the length difference between the first winding start section 131 and the second winding start section 111, so that the first winding start section 131 and the second winding start section 111 are both clamped between the two winding half shafts 71, and the winding shaft 7 can almost simultaneously wind the first electrode plate 11 and the separator 13, thereby improving the winding efficiency of the electrode assembly 10.

In some embodiments, D1 ≤ 10 mm. D1 being limited to be less than or equal to 10 mm can further balance the amount of usage of the separator 13 and the amount of usage of the first electrode plate 11, lower the costs, increase the energy density of the electrode assembly 10, save the winding time, and improve the winding efficiency.

In some embodiments, D1 is 20 mm, 15 mm, 10 mm, 5 mm, 3 mm, 1 mm or 0 mm.

In some embodiments, the length K1 of the first winding start section 131 is equal to the length K2 of the second winding start section 111, and the winding head end 11a of the first electrode plate is aligned with the winding head end 13a of the separator. For example, D1 is 0 mm.

In the embodiments of this application, the first winding start section 131 can not only reduce the risk of exposure of the winding head end 11a of the first electrode plate and improve safety, but also reduce the waste of the length of the first winding start section 131 or waste of the length of the second winding start section 111, lower the costs, and increase the energy density of the electrode assembly. The exposure of the winding head end 11a of the first electrode plate means that both sides of the winding head end 11a of the first electrode plate are not covered by the separator.

During continuous production of the electrode assembly 10, the first electrode plate 11 and the separator 13 usually need to be cut off. The winding head end 11a of the first electrode plate is a cut-off point of the first electrode plate 11 in continuous production, and the winding head end 13a of the separator is a cut-off point of the separator 13 in continuous production. In the embodiments of this application, the winding head end 11a of the first electrode plate is aligned with the winding head end 13a of the separator so that the first electrode plate 11 and the separator 13 can be cut off synchronously using a cutter mechanism 8, thereby improving the production efficiency and simplifying the production equipment.

In some embodiments, the separator 13 includes a first winding tail section 132 beyond the winding termination end 12b of the second electrode plate, and the first electrode plate 11 includes a second winding tail section 112 beyond the winding termination end 12b of the second electrode plate.

The first winding tail section 132 is a portion of the separator 13 beyond the winding termination end 12b of the second electrode plate. A length K3 of the first winding tail section 132 is a dimension of the first winding tail section 132 in the length direction of the separator 13 when the separator 13 is in the flattened state.

The second winding tail section 112 is a portion of the first electrode plate 11 beyond the winding termination end 12b of the second electrode plate. A length K4 of the second winding tail section 112 is a dimension of the second winding tail section 112 in a length direction of the first electrode plate 11 when the first electrode plate 11 is in the flattened state.

In this embodiment of this application, the length K3 of the first winding tail section 132 and the length K4 of the second winding tail section 112 are not limited. In other words, the length K3 of the first winding tail section 132 may be greater than, less than, or equal to the length K4 of the second winding tail section 112.

Both the first electrode plate 11 and the separator 13 exceed the winding termination end 12b of the second electrode plate, and the separator 13 can insulate the winding termination end 12b of the second electrode plate from the first electrode plate 11, thereby reducing the risk of short circuit. For example, the first electrode plate 11 is a negative electrode plate and the second electrode plate 12 is a positive electrode plate. The first electrode plate 11 exceeds the winding termination end 12b of the second electrode plate, and the first electrode plate 11 can receive metal ions released from the second electrode plate 12, thereby reducing the risk of metal ion precipitation.

In some embodiments, the first winding tail section 132 is located outward of the second winding tail section 112.

In some embodiments, the first winding tail section 132 includes the winding termination end 13b of the separator, and the second winding tail section 112 includes the winding termination end 11b of the first electrode plate, and the spacing between the winding termination end 13b of the separator and the winding termination end 11b of the first electrode plate is D2, D2 ≤ 20 mm.

After the electrode assembly 10 is disassembled, the first electrode plate 11, the separator 13, and the second electrode plate 12 are flattened, and their relative positions remain unchanged. At this point, in the length direction of the separator 13, the minimum distance between the winding termination end 13b of the separator and the winding termination end 11b of the first electrode plate is D2.

The first winding tail section 132 extends from the winding termination end 13b of the separator to a position at a junction between the separator 13 and the winding termination end 12b of the second electrode plate, and the second winding tail section 112 extends from the winding termination end 11b of the first electrode plate to a position at a junction between the first electrode plate 11 and the winding termination end 12b of the second electrode plate. In other words, the absolute value of a difference between the length K3 of the first winding tail section 132 and the length K4 of the second winding tail section 112 is D2.

D2 being limited to be less than or equal to 20 mm can balance an amount of usage of the separator 13 and an amount of usage of the first electrode plate 11, lower the costs, and increase the energy density of the electrode assembly 10. A minimum distance of less than or equal to 20 mm between the winding termination end 13b of the separator and the winding termination end 11b of the first electrode plate can cause the separator 13 and the first electrode plate 11 to stop winding almost simultaneously, reducing the total duration of winding, saving winding time, and improving winding efficiency.

When the separator 13 exceeds the winding termination end 11b of the first electrode plate, a greater D2 indicates a greater length K3 of the first winding tail section 132 and a greater amount of usage of the separator 13. If D2 is too large, serious waste of the separator 13 happens, increasing the costs and decreasing the energy density. When the first electrode plate 11 exceeds the winding termination end 13b of the separator, a greater D2 indicates a greater length K4 of the second winding tail section 112 and a greater amount of usage of the first electrode plate 11. If D2 is too large, serious waste of the first electrode plate 11 happens, increasing the costs and decreasing the energy density.

D2 being limited to be less than or equal to 20 mm can balance an amount of usage of the separator 13 and an amount of usage of the first electrode plate 11, lower the costs, and increase the energy density of the electrode assembly 10.

In some embodiments, D2 ≤ 10 mm. D2 being limited to be less than or equal to 10 mm can further balance the amount of usage of the separator 13 and the amount of usage of the first electrode plate 11, lower the costs, increase the energy density of the electrode assembly 10, save the winding time, and improve the winding efficiency.

In some embodiments, D2 is 20 mm, 15 mm, 10 mm, 5 mm, 3 mm, 1 mm or 0 mm.

In some embodiments, the length K3 of the first winding tail section 132 is equal to the length K4 of the second winding tail section 112, and the winding termination end 11b of the first electrode plate is aligned with the winding termination end 13b of the separator. For example, D2 is 0 mm.

In the embodiments of this application, the first winding tail section 132 can not only reduce the risk of exposure of the winding termination end 11b of the first electrode plate and improve safety, but also reduce the waste of the length of the first winding tail section 132 or waste of the length of the second winding tail section 112, lower the costs, and increase the energy density of the electrode assembly.

During continuous production of the electrode assembly 10, the first electrode plate 11 and the separator 13 usually need to be cut off. The winding termination end 11b of the first electrode plate is a cut-off point of the first electrode plate 11 in continuous production, and the winding termination end 13b of the separator is a cut-off point of the separator 13 in continuous production. In the embodiments of this application, the winding termination end 11b of the first electrode plate is aligned with the winding termination end 13b of the separator so that the first electrode plate 11 and the separator 13 can be cut off synchronously using a cutter mechanism 8, thereby improving the production efficiency and simplifying the production equipment.

In some embodiments, there are two separators 13, and the two separators 13 are equal in length.

For example, the length of the two separators 13 is L1.

For example, "equal in length" allows for a certain margin of error. For example, when the difference in length between two separators 13 is less than or equal to 2 mm, the two separators 13 can be considered to be equal in length.

The two separators 13 can cover the second electrode plate 12 from two sides to separate the second electrode plate 12 from the first electrode plate 11, thereby reducing the risk of short circuit between the second electrode plate 12 and the first electrode plate 11. The two separators 13 are equal in length, which can reduce the amount of usage of each separator 13, lower the costs, and increase the energy density of the electrode assembly 10.

In some embodiments, the minimum distance between a winding head end 13a of one separator and the winding head end 11a of the first electrode plate is D1, D1 ≤ 50 mm. Optionally, D1 ≤ 20 mm. Further optionally, D1 ≤ 10 mm.

In some embodiments, the minimum distance between a winding head end 13a of the other separator and the winding head end 11a of the first electrode plate is D3, D3 ≤ 50 mm. Optionally, D3 ≤ 20 mm. Further optionally, D3 ≤ 10 mm.

In some embodiments, D1 = D3.

In some embodiments, the winding head ends 13a of the two separators are aligned with each other and the winding termination ends 13b of the two separators are aligned with each other.

In some embodiments, the first electrode plate 11, the separator 13, and the second electrode plate 12 are wound to form a straight region B1 and two bending regions B2, the two bending regions B2 being located on two sides of the straight region B1 in a first direction X, respectively.

The bending region B2 is a region with a bending structure in the electrode assembly 10. In this bending region B2, the first electrode plate 11, the second electrode plate 12, and the separator 13 are all bent. For example, the portion of the first electrode plate 11 located in the bending region B2 is generally bent into an arc shape, and the portion of the second electrode plate 12 located in the bending region B2 is generally bent into an arc shape.

The straight region B1 is a region in which the electrode assembly 10 has a straight structure, and the portions of the first electrode plate 11 and the second electrode plate 12 located in the straight region B1 are basically flat. For example, the surface of each layer of the first electrode plate and the surface of each layer of the second electrode plate located in the straight region B1 are substantially planar.

The electrode assembly 10 in the embodiments of this application has a flat structure. Flat structure can be applied to prismatic battery cells.

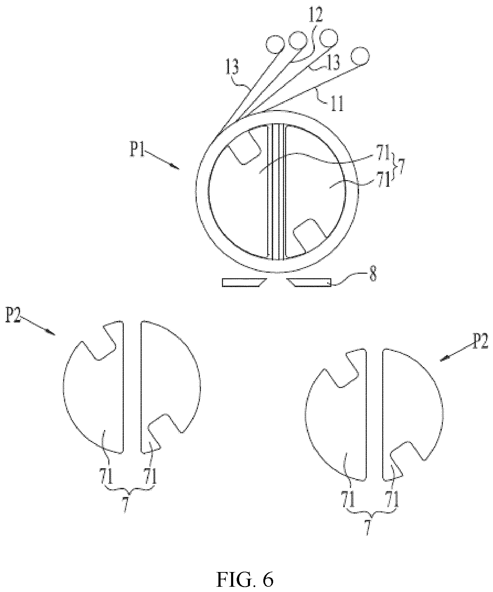

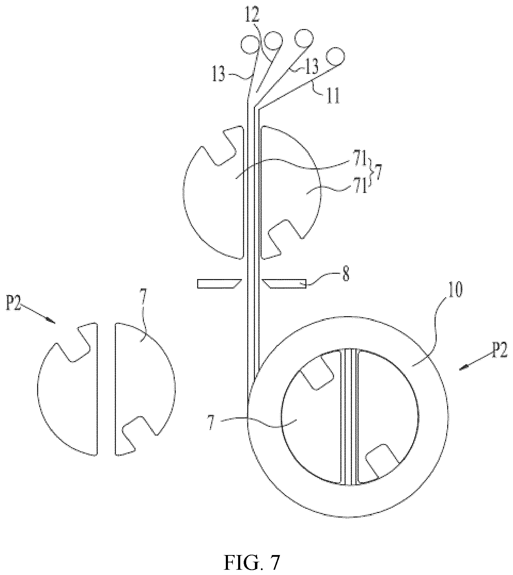

FIG. 6 is a schematic diagram of a winding device according to some embodiments of this application, and FIG. 7 is another schematic diagram of a winding device according to some embodiments of this application.

As shown in FIG. 6 and FIG. 7, in some embodiments, the winding device includes at least one winding shaft 7 at a winding station P1 and at least one winding shaft 7 at a non-winding station P2.

As shown in FIG. 6, the winding shaft 7 located at the winding station P1 (that is, the winding shaft 7 on the upper side) is used for winding the first electrode plate 11, the second electrode plate 12, and the separator 13. When the first electrode plate 11, the second electrode plate 12, and the separator 13 are wound for a set number of turns, the second electrode plate 12 is cut off.

Then, the winding shaft 7 wound with the first electrode plate 11, the separator 13, and the second electrode plate 12 moves to the non-winding station P2 (as shown in FIG. 7, to the lower right side). Another winding shaft 7 moves from the non-winding station P2 to the winding station P1, and clamps the first electrode plate 11 and the separator 13. For example, the portion of the first electrode plate 11 clamped by the another winding shaft 7 is a portion of the second winding start section 111, and the portion of the separator 13 clamped by the another winding shaft 7 is a portion of the first winding start section 131.

Then, the cutter mechanism 8 separates the first electrode plate 11 from the separator 13. The cutter mechanism 8 cuts off both the first electrode plate 11 and the separator 13, so that the winding head end 11a of the first electrode plate and the winding head end 13a of the separator are aligned with each other.

Finally, the another winding shaft 7 moved to the winding station P1 starts winding the first electrode plate 11, the separator 13, and the second electrode plate 12.

Other processes may be performed on the assembly consisting of the first electrode plate 11, the second electrode plate 12, and the separator 13 on the winding shaft 7 on the lower right side, for example, attaching a binding member described below.

After the first electrode plate 11, the separator 13, and the second electrode plate 12 are wound for a predetermined number of turns at the winding station P1, the second electrode plate 12 is cut off to enter a next cycle.

In some embodiments, the winding device includes three winding shafts 7, one at the winding station P1 and the other two at non-winding stations P2. For example, a winding shaft 7 on the upper side is a winding shaft 7 located at the winding station P1, and a winding shaft 7 on the lower left side and a winding shaft 7 on the lower right side are winding shafts 7 located at the non-winding stations P2. For example, the winding shaft 7 on the lower left side is used for a cutting process.

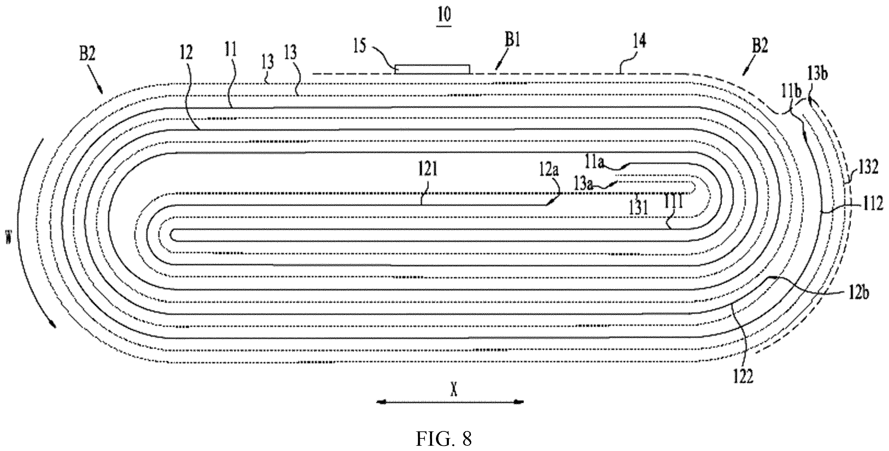

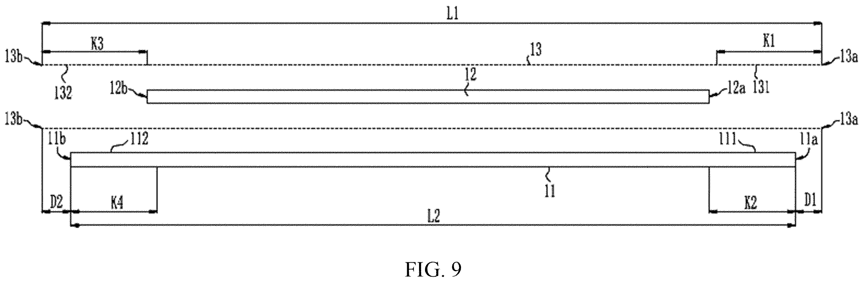

FIG. 8 is a schematic structural diagram of an electrode assembly according to some other embodiments of this application; and FIG. 9 is a schematic structural diagram of the electrode assembly shown in FIG. 8 after being flattened.

As shown in FIG. 8 and FIG. 9, in some embodiments, L1 > L2.

The separator 13 can cover the first electrode plate 11 to effectively separate the first electrode plate 11 from the second electrode plate 12. An excess design of the separator 11 can improve safety performance of electrode assembly.

In some embodiments, L1-L2 is 0.1-5 mm.

In some embodiments, the length K1 of the first winding start section 131 is greater than the length K2 of the second winding start section 111, and the first winding start section 131 covers the winding head end 11a of the first electrode plate.

The first winding start section 131 covers the winding head end 11a of the first electrode plate, which means that after the first electrode plate 11 and the separator 13 are flattened, in a thickness direction of the first electrode plate, a projection of the winding head end 11a of the first electrode plate is located within a proj ection of the first winding start section 131.

The electrode assembly 10 swells during charging and discharging so that the first winding start section 131 is prone to being pulled, leading to a risk of exposure of the winding head end 11a of the first electrode plate. In the embodiments of this application, the length of the first winding start section 131 is made longer than the length of the second winding start section 111, leaving a margin for the first winding start section 131. When the first winding start section 131 is pulled, the first winding start section 131 can cover the winding head end 11a of the first electrode plate, reducing the risk of exposure of the winding head end 11a of the first electrode plate and improving safety.

Optionally, a difference between the length K1 of the first winding start section 131 and the length K2 of the second winding start section 111 is 0.05-2.5 mm.

In some embodiments, the length K3 of the first winding tail section 132 is greater than the length K4 of the second winding tail section 112, and the first winding tail section 132 covers the winding termination end 11b of the first electrode plate.

The first winding tail section 132 covers the winding termination end 11b of the first electrode plate, which means that after the first electrode plate 11 and the separator 13 are flattened, in the thickness direction of the first electrode plate, a projection of the winding termination end 11b of the first electrode plate is located within a projection of the first winding tail section 132.

The electrode assembly 10 swells during charging and discharging so that the first winding tail section 132 is prone to being pulled, leading to a risk of exposure of the winding termination end 11b of the first electrode plate. In the embodiments of this application, the length of the first winding tail section 132 is made longer than the length of the second winding tail section 112, leaving a margin for the first winding tail section 132. When the first winding tail section 132 is pulled, the first winding tail section 132 can cover the winding termination end 11b of the first electrode plate, reducing the risk of exposure of the winding termination end 11b of the first electrode plate and improving safety.

Optionally, a difference between the length K3 of the first winding tail section 132 and the length K4 of the second winding tail section 112 is 0.05-2.5 mm.

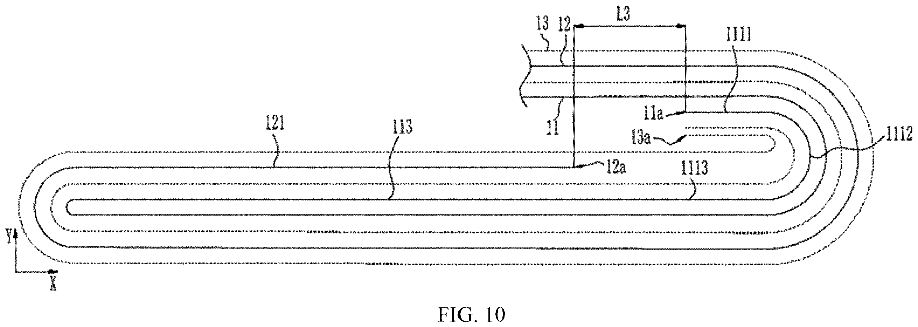

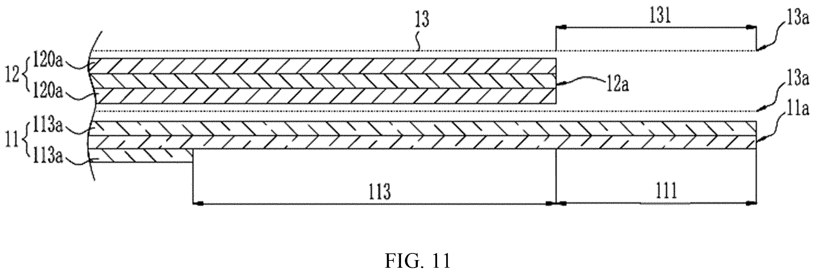

FIG. 10 is a local schematic diagram of the electrode assembly shown in FIG. 4, and FIG. 11 is a schematic diagram of the electrode assembly shown in FIG. 10 in a flattened state.

As shown in FIG. 10 and FIG. 11, in some embodiments, a first electrode plate 11 includes a second winding start section 111 beyond a winding head end 12a of a second electrode plate. At least a portion of the second winding start section 111 is located in the bending region B2.

The second winding start section 111 being bent in the bending region B2 can reduce space occupied by the second winding start section 111 in the first direction X, thereby contributing to increasing energy density of the electrode assembly 10.

In some embodiments, the second winding start section 111 includes a first portion 1111, a second portion 1112, and a third portion 1113 that are consecutively arranged. The first portion 1111 includes the winding head end 1 1a of the first electrode plate. The third portion 1113 has a junction aligned with the winding head end 12a of the second electrode plate, and the third portion 1113 extends from the junction. Both the first portion 1111 and the third portion 1113 are located in the straight region B1, and the second portion 1112 is located in the bending region B2 and configured to connect the first portion 1111 and the third portion 1113.

In the embodiments of this application, the second winding start section 111 is bent into a double-layer structure to reduce space occupied by the second winding start section 111 in the first direction X, thereby increasing the energy density of the electrode assembly 10.

In some embodiments, as shown in FIG. 7, in the winding process of the electrode assembly 10, at least a portion of the first portion 1111 is located outward of the winding shaft 7, and at least a portion of the third portion 1113 can be clamped in the winding shaft 7. At least a portion of the first portion 1111 extends out of the winding shaft 7, which is convenient for the cutter mechanism 8 to cut off the first electrode plate 11 and the separator 13.

In the embodiments of this application, a distance between the winding shaft 7 and the winding head end 12a of the second electrode plate can be increased, reducing the influence on the winding head end 12a of the second electrode plate when the winding shaft 7 is pulled out and reducing the risk that the winding head end 12a of the second electrode plate deviates from a predetermined position.

In some embodiments, the second portion 1112 supports portions of the first electrode plate 11 and the second electrode plate 12 that are in the bending region B2 and located outward of the second portion 1112.

The second portion 1112 can provide supporting force for the portions of the first electrode plate 11 and the second electrode plate 12 that are in the bending region B2 and located outward of the second portion 1112, so that the portions of the first electrode plate 11 and the second electrode plate 12 in the bending region B2 are more compact, and the gap between the portion of the first electrode plate 11 in the bending region B2 and the portion of the second electrode plate 12 in the bending region B2 is not easily enlarged due to external force, thereby reducing a risk of lithium precipitation.

The second portion 1112 can also spread a portion of the first electrode plate 11 located outward of the second portion 1112, increase a curvature radius of the portion of the first electrode plate 11 located outward of the second portion 1112, reduce the detachment of an active substance in the portion of the first electrode plate 11 located outward of the second portion 1112, and reduce the risk of lithium precipitation. The second portion 1112 can also spread a portion of the second electrode plate 12 located outward of the second portion 1112, increase the curvature radius of the portion of the second electrode plate 12 located outward of the second portion 1112, reduce the detachment of an active substance in the portion of the second electrode plate 12 located outward of the second portion 1112, and reduce the risk of lithium precipitation.

The second portion 1112 extends beyond the second electrode plate 12 and does not participate in the reaction with the second electrode plate 12 itself, and the second portion 1112 may not be coated with an active substance. In addition, even if the second portion 1112 is coated with an active substance and there is detachment of the active substance in the second portion 1112, lithium precipitation will not occur in the second portion 1112. Therefore, the second portion 1112 may be disposed in the bending region B2.

In some embodiments, the first electrode plate 11 further includes a unilateral reaction section 113 continuously arranged with the third portion 1113, and the unilateral reaction section 113 and the third portion 1113 are separated at the junction. Only an active substance layer 113a on an outer surface of the unilateral reaction section 113 is opposite to an active substance layer 120a of the second electrode plate 12. At least a portion of the unilateral reaction section 113 is stacked outward of the second winding start section 111, and there is no separator 13 or second electrode plate 12 between the second winding start section 111 and the portion of the unilateral reaction section 113 stacked outward of the second winding start section 111.

In an example, only the outer surface of the unilateral reaction section 113 is coated with the active substance layer 113a. In another example, both the inner surface and the outer surface of the unilateral reaction section 113 are coated with the active substance layer 113a. Since the second electrode plate 12 is only arranged outward of the unilateral reaction section 113, the active substance layer 113a on the inner surface of the unilateral reaction section 113 basically does not participate in electrochemical reactions with the second electrode plate 12.

The second winding start section 111 is closer to a winding center of the electrode assembly than the portion of the unilateral reaction section 113 stacked outward of the second winding start section 111.

In the embodiments of this application, the unilateral reaction section 113 is adjacent to the second winding start section 111, and the separator 13 between the unilateral reaction section 113 and the second winding start section 111 can be omitted, thereby saving an amount of usage of the separator 13 and increasing the energy density of the electrode assembly 10. In addition, the unilateral reaction section 113 and the second winding start section 111 have a same polarity and are arranged adjacent to each other, which can reduce the risk of short circuit and improve safety.

In some embodiments, the second electrode plate 12 is a negative electrode plate. The unilateral reaction section 113 and the second winding start section 111 are adjacent to each other, unlikely to pose a risk of lithium precipitation.

In some embodiments, the unilateral reaction section 113 is wound one turn.

In some embodiments, the portion of the unilateral reaction section 113 stacked outward of the second winding start section 111 is in contact with the second winding start section 111.

The second winding start section 111 can support the unilateral reaction section 113, and the supporting force provided by the second portion 1112 may be transmitted to the unilateral reaction section 113 first and then to the second electrode plate 12 through the unilateral reaction section 113, so that the second winding start section 111 can better support the unilateral reaction section 113 and the second electrode plate 12.

In some embodiments, the second electrode plate 12 includes a third winding start section 121 extending from the winding head end 12a of the second electrode plate, and the third winding start section 121 is entirely located in the straight region B1. In the thickness direction Y of the third winding start section 121, the third winding start section 121 does not overlap with the first portion 1111.

In the embodiments of this application, with the third winding start section 121 not overlapping with the first portion 1111, the two can share the same space in the thickness direction Y, thereby improving space utilization and increasing the energy density of the electrode assembly 10. In addition, the end of the third winding start section 121 is not likely to press the first portion 1111, and the end of the first portion 1111 is not likely to press the third winding start section 121, so that stress concentration can be reduced, reducing the risk of electrode plate fracture caused by stress concentration.

In some embodiments, the end of the third winding start section 121 is the winding head end 12a of the second electrode plate, and the end of the first portion 1111 is the winding head end 11a of the first electrode plate.

In some embodiments, the third winding start section 121 extends from the winding head end 12a of the second electrode plate in the negative direction of the first direction X, and the first portion 1111 extends from the winding head end 11a of the first electrode plate in the positive direction of the first direction X.

In some embodiments, in the first direction X, the third winding start section 121 is spaced apart from the first portion 1111.

In the embodiments of this application, the third winding start section 121 is spaced apart from the first portion 1111 to reduce the risk of overlapping the third winding start section 121 with the first portion 1111.

In some embodiments, in the first direction X, the distance between the third winding start section 121 and the first portion 1111 is L3, L3 being 5-20 mm. Optionally, L3 is 5 mm, 8 mm, 10 mm, 15 mm, or 20 mm.

During charging and discharging, the electrode assembly 10 swells and deforms. If L3 is too small, there may be an overlap between the third winding start section 121 and the first portion 1111. A greater L3 indicates smaller dimensions of the third winding start section 121 and the first portion 1111 in the first direction X. If L3 is too large, space waste happens, and the energy density of the electrode assembly 10 is decreased.

With L3 of 5-20 mm, the risk of overlapping of the third winding start section 121 with the first portion 1111 can be reduced, and loss of energy density of the electrode assembly 10 can be reduced.

In some embodiments, in the first direction X, a dimension of the first portion 1111 is 5-20 mm. For example, the dimension of the first portion 1111 in the first direction X is 5 mm, 7 mm, 10 mm, 12 mm, 15 mm, 18 mm, or 20 mm.

In some embodiments, in the first direction X, a minimum distance between the third winding start section 121 and the first portion 1111 is greater than or equal to the dimension of the first portion 1111.

Optionally, the minimum distance between the third winding start section 121 and the first portion 1111 is L3.

In the winding process of the electrode assembly 10, due to process errors, there may be a significant dimensional deviation in the first direction X in the first portion 1111. The minimum distance between the third winding start section 121 and the first portion 1111 is defined based on the dimension of the first portion 1111, which can effectively reduce the risk of overlapping of the third winding start section 121 with the first portion 1111.

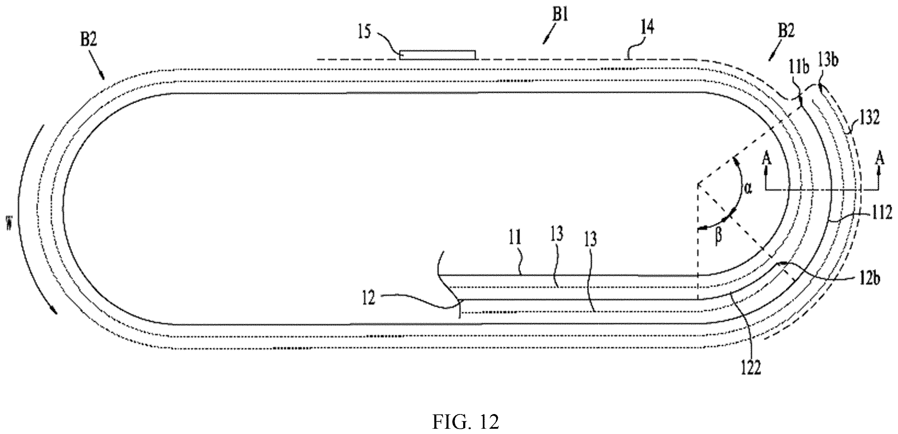

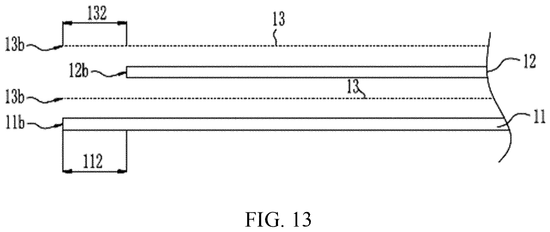

FIG. 12 is another local schematic diagram of the electrode assembly shown in FIG. 4, and FIG. 13 is a schematic diagram of the electrode assembly shown in FIG. 12 in a flattened state.

As shown in FIG. 12 and FIG. 13, in some embodiments, the winding termination end 1 1b of the first electrode plate is located in the bending region B2.

In the embodiments of this application, the winding termination end 12b of the second electrode plate is not limited. The winding termination end 12b of the second electrode plate may be located in the bending region B2 or the straight region B1.

In the process of charging and discharging the battery cell, the straight region B1 of the electrode assembly 10 swells greatly, and the straight region B1 is susceptible to mutual pressure with the housing. If the winding termination end 11b of the first electrode plate is disposed in the straight region B1, the winding termination end 11b of the first electrode plate is prone to stress concentration, leading to risks such as the second electrode plate 12 being broken by the winding termination end 11b of the first electrode plate, and lithium precipitation. In the embodiments of this application, the winding termination end 11b of the first electrode plate being disposed in the bending region B2 can reduce stress concentration, reduce risks such as fracture of the second electrode plate 12 and lithium precipitation, and improve safety.

In some embodiments, the first electrode plate 11 includes the second winding tail section 112 beyond the winding termination end 12b of the second electrode plate, the second winding tail section 112 including the winding termination end 11b of the first electrode plate. The second winding tail section 112 is entirely located in the bending region B2.

The second winding tail section 112 being entirely located in the bending region B2 can reduce the length K4 of the second winding tail section 112 and reduce material waste.

In some embodiments, the inner surface of the second winding tail section 112 is approximately a portion of a cylindrical surface. Alternatively, a projection of the inner surface of the second winding tail section 112 along a winding axial direction Z is an arc line, where a central angle of the arc line is α, 0° < α < 90°. Alternatively, α is 10°, 30°, 45°, 60°, 75°, or 85°.

The second winding tail section 112 is generally bent into an arc shape in the bending region B2.

In the embodiments of this application, the length of the second winding tail section 112 can be set as required.

In some embodiments, 30° ≤ α ≤ 60°. Optionally, α is 40°-50°. Further optionally, α is 45°.

A larger α indicates a greater length K4 of the second winding tail section 112, a larger space occupied by and a larger weight of the second winding tail section 112, and a lower energy density of the electrode assembly 10. The electrode assembly 10 swells during charging and discharging, which may lead to a risk of deviation of the second winding tail section 112. If α is too small, the first electrode plate 11 may not cover the second electrode plate 12 due to the deviation of the second winding tail section 112, thereby leading to safety problems such as lithium precipitation.

With α defined to be 30°-60°, the safety and energy density of the electrode assembly 10 can be balanced.

In some embodiments, the length K4 of the second winding tail section 112 is 5-20 mm. For example, the length K4 of the second winding tail section 112 is 5 mm, 7 mm, 10 mm, 12 mm, 15 mm, 18 mm, or 20 mm.

In some embodiments, the winding termination end 12b of the second electrode plate is located in the bending region B2.

The winding termination end 12b of the second electrode plate and the winding termination end 11b of the first electrode plate may be located in the same bending region B2 or in two bending regions B2, respectively.

In the embodiments of this application, the winding termination end 12b of the second electrode plate being disposed in the bending region B2 can reduce stress concentration, reduce the risk of the first electrode plate 11 being broken by the winding termination end 12b of the second electrode plate, reduce lithium precipitation, and improve safety.

In some embodiments, the winding termination end 12b of the second electrode plate and the winding termination end 11b of the first electrode plate may be located in the same bending region B2.

In some embodiments, the second electrode plate 12 includes a third winding tail section 122, the third winding tail section 122 extending from the winding termination end 12b of the second electrode plate and being entirely located in the bending region B2.

In some embodiments, the inner surface of the third winding tail section 122 is approximately a portion of a cylindrical surface. Alternatively, a projection of the inner surface of the third winding tail section 122 along a winding axial direction Z is an arc line, where a central angle of the arc line is β, 0° < β < 45°. Optionally, 0° < α < 45°.

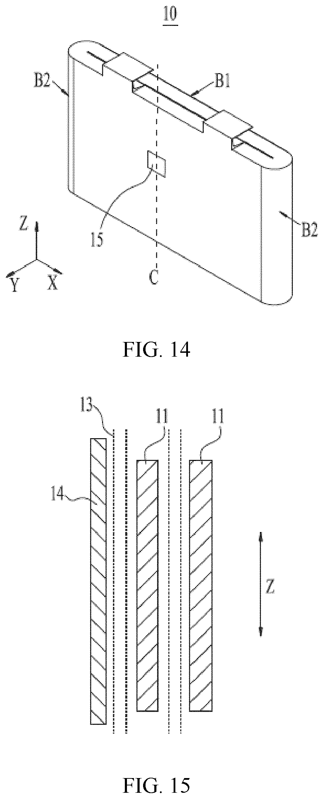

FIG. 14 is a schematic diagram of a three-dimensional structure of an electrode assembly according to some embodiments of this application; and FIG. 15 is a schematic cross-sectional diagram of the electrode assembly shown in FIG. 12 along a line A-A.

Refer to FIG. 12 to FIG. 15 together. In some embodiments, a separator 13 includes a first winding tail section 132 beyond a winding termination end 12b of a second electrode plate, the first winding tail section 132 including a winding termination end 13b of the separator. The electrode assembly 10 further includes a binding member 14. The binding member 14 is connected to the separator 13 and used for binding the first winding tail section 132.

The binding member 14 can bind the first winding tail section 132 to reduce the risk of scattering of the separator 13.

In some embodiments, the first winding tail section 132 is located outward of the second winding tail section 112, and the binding member 14 binds the second winding tail section 112 through the first winding tail section 132 to reduce the risk of scattering of the first electrode plate 11.

In some embodiments, the first electrode plate 11 includes the second winding tail section 112 beyond the winding termination end 12b of the second electrode plate, the second winding tail section 112 including the winding termination end 11b of the first electrode plate. The first winding tail section 132 and the second winding tail section 112 are located in the same bending region B2. One end of the binding member 14 is located outward of and connected to the first winding tail section 132, and another end of the binding member 14 exceeds the winding termination end 11b of the first electrode plate and the winding termination end 13b of the separator and is connected to the separator 13.

In the embodiments of this application, the winding termination end 11b of the first electrode plate and the winding termination end 13b of the separator are not limited. In some examples, the winding termination end 11b of the first electrode plate exceeds the winding termination end 13b of the separator. In some other examples, the winding termination end 13b of the separator exceeds the winding termination end 11b of the first electrode plate. In still some other examples, the winding termination end 11b of the first electrode plate is flush with the winding termination end 13b of the separator.

The another end of the binding member 14 may be located in the bending region B2 or the straight region B1.

The binding member 14 can connect the first winding tail section 132 to other portions of the separator 13 to bind the first winding tail section 132 and reduce the risk of scattering of the separator 13.

For example, the binding member 14 extends along a winding direction W of the second electrode plate 12, one end of the binding member 14 is the head end of the binding member 14 in the winding direction W, and another end of the binding member 14 is the termination end of the binding member 14 in the winding direction W. For example, the winding direction W of the second electrode plate 12 is counterclockwise.

In some embodiments, the another end of the binding member 14 is located in the straight region B1. The straight region B1 is relatively flat, which facilitates the connection between the binding member 14 and the separator 13 and increases the connection strength between the binding member 14 and the separator 13.

In some embodiments, the binding member 14 includes an adhesive tape. Optionally, the binding member 14 includes an insulating adhesive tape.

In some embodiments, the electrode assembly 10 further includes an identification label 15, the identification label 15 being disposed on a surface of the binding member 14 facing away from the straight region B1.

For example, the identification label 15 may record production data of the electrode assembly 10 for subsequent data tracing.

The production equipment of the electrode assembly 10 can obtain relevant information about the electrode assembly 10 by reading the identification label 15, which helps to realize automatic production of electrode assemblies 10. Compared with a solution of disposing the identification label 15 on the separator 13, disposing the identification label 15 on the binding member 14 can reduce the risk of damage to the separator 13.

In some embodiments, a thickness of the binding member 14 is greater than a thickness of the separator 13. The binding member 14 has relatively large thickness and strength, which can not only effectively bind the separator 13, but also support the identification label 15.

The another end of the binding member 14 exceeds a center line C of the straight region B1, the center line C being parallel to a winding axial direction Z of the electrode assembly 10. The identification label 15 covers at least portion of the center line C.

For example, the winding axial direction Z is perpendicular to the first direction X and the winding direction W of the second electrode plate 12.

In the embodiments of this application, the center line C is a virtual straight line. In a plane parallel to the first direction X and the winding axial direction Z, a projection of the straight region B1 is generally rectangular; and the center line C may be a center line of the rectangular projection parallel to the winding axial direction Z.

In the embodiments of this application, the identification label 15 is disposed near the center of the straight region B1 in the first direction X for detection by an external device.

In some embodiments, in a plane parallel to the first direction X and the winding axial direction Z, a projection of the straight region B1 is generally rectangular; and the identification label 15 is located at the center of the rectangular projection. A code reader can conveniently identify the identification label 15 in the embodiments.

In some embodiments, two edges of the binding member 14 both exceed the first electrode plate 11 in the winding axial direction Z of the electrode assembly 10.

In the embodiments of this application, the two edges of the binding member 14 both exceeding the first electrode plate 11 means that the two edges of the binding member 14 both exceed the active substance layer of the first electrode plate 11.

In the embodiments of this application, the binding member 14 can cover the first electrode plate 11 to reduce the risk of exposure of the active substance layer of the first electrode plate 11 and improve safety.

In some embodiments, in an actual production process, due to the tension of the winding process, a cut separator 13 may shrink elastically, causing the length K3 of the first winding tail section 132 to be shorter than the length K4 of the second winding tail section 112 and resulting in a portion of the second winding tail section 112 being exposed. The binding member 14 can cover the portion of the second winding tail section 112 that is not covered by the first winding tail section 132, thereby reducing the risk of exposure of the first electrode plate 11 and improving safety.

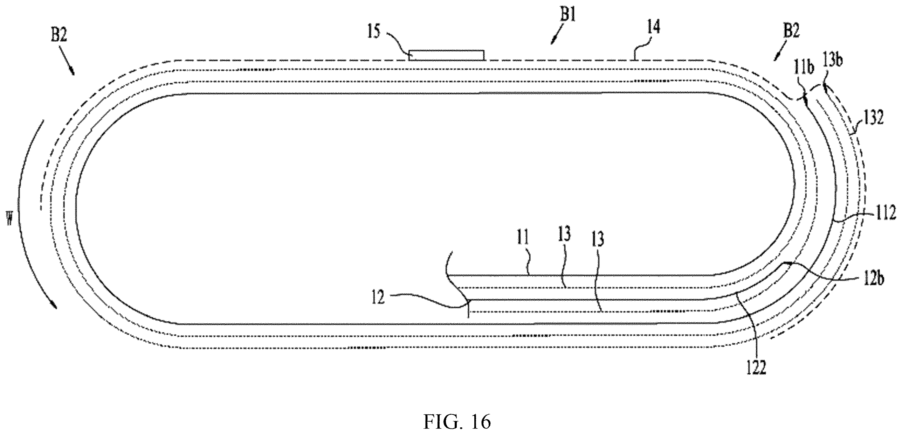

FIG. 16 is a local schematic diagram of an electrode assembly according to some other embodiments of this application.

As shown in FIG. 16, in some embodiments, another end of the binding member 14 is located in another of the bending regions B2.

Two ends of the binding member 14 in the winding direction W of the second electrode plate 12 are located in two bending regions B2, respectively. For example, the binding member 14 extends along the winding direction W of the second electrode plate 12 from one bending region B2, across the straight region B1, and to another bending region B2.

In the embodiments of this application, with the two ends of the binding member 14 disposed in the bending regions B2, the pressure applied to the ends of the binding member 14 when the electrode assembly 10 swells can be reduced, which reduces stress concentration, reduces the risk of the electrode plate being broken, reduces lithium precipitation, and improves safety.

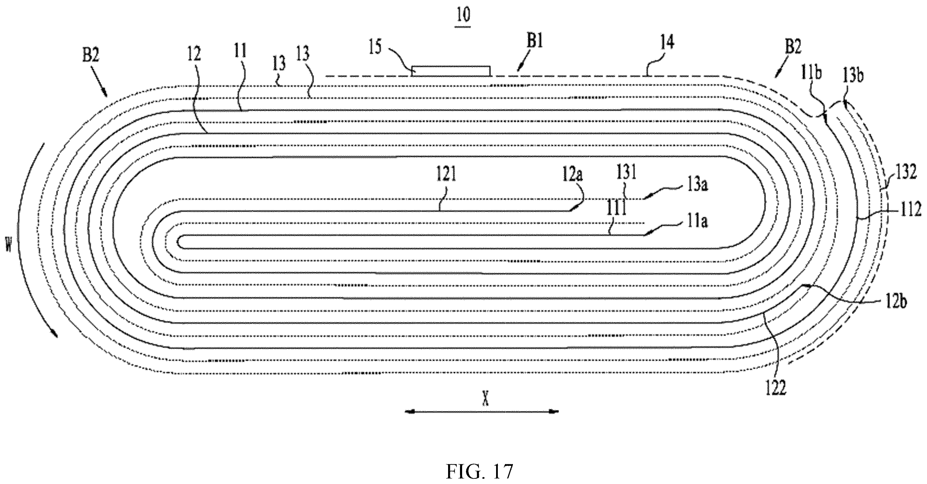

FIG. 17 is a schematic structural diagram of an electrode assembly according to some other embodiments of this application.

As shown in FIG. 17, in some embodiments, a first electrode plate 11 includes a second winding start section 111 beyond a winding head end 12a of a second electrode plate. A second winding start section 111 is entirely located in a straight region B1.

The second winding start section 111 is clamped in the straight region B1, which can improve stability of the second winding start section 111, reduce a risk of deviation of the second winding start section 111 when the electrode assembly 10 is subjected to external impact, and improve safety.

In the embodiments of this application, a length K2 of the second winding start section 111 can also be reduced to save materials and increase energy density of the electrode assembly 10.

In some embodiments, a first winding start section 131 is entirely located in the straight region B1.

In some embodiments, a length K1 of the first winding start section 131 is equal to the length K2 of the second winding start section 111.

In some embodiments, a third winding start section 121 is entirely located in the straight region B1.

According to some embodiments of this application, this application further provides a battery cell, including a housing and the electrode assembly according to any one of the foregoing embodiments, where the electrode assembly is accommodated in the housing.

According to some embodiments of this application, this application further provides a battery, including a plurality of battery cells according to any one of the foregoing embodiments.

According to some embodiments of this application, this application further provides an electric apparatus, including the battery according to any one of the foregoing embodiments, where the battery is configured to supply electrical energy to the electric apparatus. The electric apparatus may be any one of the foregoing devices or systems using a battery.

According to some embodiments of this application, referring to FIG. 4 and FIG. 5, an embodiment of this application provides a wound electrode assembly 10 including a first electrode plate 11, a second electrode plate 12, and two separators 13. The first electrode plate 11 is a negative electrode plate, the second electrode plate 12 is a positive electrode plate, and the two separators 13 are used to separate the first electrode plate 11 from the second electrode plate 12.

The first electrode plate 11, the second electrode plate 12, and the two separators 13 are wound together. A length of each separator 13 is L1, and a length of the first electrode plate 11 is L2, where L1 = L2.

The separator 13 includes a first winding start section 131 beyond a winding head end 12a of the second electrode plate, and the first electrode plate 11 includes a second winding start section 111 beyond the winding head end 12a of the second electrode plate. A length K1 of the first winding start section 131 is equal to a length K2 of the second winding start section 111.

The separator 13 includes a first winding tail section 132 beyond the winding termination end 12b of the second electrode plate, and the first electrode plate 11 includes a second winding tail section 112 beyond the winding termination end 12b of the second electrode plate. A length K3 of the first winding tail section 132 is equal to a length K4 of the second winding tail section 112.

It should be noted that, without conflict, the embodiments and features in the embodiments in this application may be combined with each other.

In conclusion, it should be noted that the foregoing embodiments are merely intended for describing the technical solutions of this application, but not for limiting this application. Although this application is described in detail with reference to the foregoing embodiments, persons of ordinary skills in the art should understand that they may still make modifications to the technical solutions described in the foregoing embodiments or make equivalent replacements to some technical features thereof, without departing from the spirit and scope of the technical solutions of the embodiments of this application.

## Claims

1. An electrode assembly comprising a first electrode plate, a second electrode plate, and at least one separator for separating the first electrode plate from the second electrode plate, wherein the first electrode plate and the second electrode plate have opposite polarities, and the first electrode plate, the second electrode plate, and the at least one separator are wound together;
wherein a length of the at least one separator is L1, a length of the first electrode plate is L2, and |L1-L2| ≤ 50 mm.

2. The electrode assembly according to claim 1, wherein L1 and L2 satisfy |L1-L2| ≤ 30 mm.

3. The electrode assembly according to claim 2, wherein L1 and L2 satisfy |L1-L2| ≤ 10 mm.

4. The electrode assembly according to any one of claims 1 to 3, wherein L1 = L2.

5. The electrode assembly according to any one of claims 1 to 3, wherein L1 > L2.

6. The electrode assembly according to any one of claims 1 to 5, wherein the separator comprises a first winding start section beyond a winding head end of the second electrode plate, and the first electrode plate comprises a second winding start section beyond the winding head end of the second electrode plate; and
the first winding start section comprises a winding head end of the separator, the second winding start section comprises a winding head end of the first electrode plate, and a minimum distance between the winding head end of the separator and the winding head end of the first electrode plate is D1, D1 ≤ 20 mm.

7. The electrode assembly according to claim 6, wherein D1 ≤ 10 mm.

8. The electrode assembly according to claim 6 or 7, wherein a length of the first winding start section is greater than a length of the second winding start section, and the first winding start section covers the winding head end of the first electrode plate.

9. The electrode assembly according to claim 6 or 7, wherein a length of the first winding start section is equal to a length of the second winding start section, and the winding head end of the separator is aligned with the winding head end of the first electrode plate.

10. The electrode assembly according to any one of claims 1 to 9, wherein the separator comprises a first winding tail section beyond a winding termination end of the second electrode plate, and the first electrode plate comprises a second winding tail section beyond the winding termination end of the second electrode plate; and
the first winding tail section comprises a winding termination end of the separator, the second winding tail section comprises a winding termination end of the first electrode plate, and a distance between the winding termination end of the separator and the winding termination end of the first electrode plate is D2, D2 ≤ 20 mm.

11. The electrode assembly according to claim 10, wherein D2 ≤ 10 mm.

12. The electrode assembly according to claim 10 or 11, wherein a length of the first winding tail section is greater than a length of the second winding tail section, and the first winding tail section covers the winding termination end of the first electrode plate.

13. The electrode assembly according to claim 10 or 11, wherein a length of the first winding tail section is equal to a length of the second winding tail section, and the first winding tail section is aligned with the winding termination end of the first electrode plate.

14. The electrode assembly according to any one of claims 1 to 13, wherein there are two separators, and the two separators are equal in length.

15. The electrode assembly according to any one of claims 1 to 14, wherein the first electrode plate, the separator, and the second electrode plate are wound to form a straight region and two bending regions, the two bending regions being located on two sides of the straight region in a first direction, respectively.

16. The electrode assembly according to claim 15, wherein the first electrode plate comprises the second winding start section beyond the winding head end of the second electrode plate; and
the second winding start section is entirely located in the straight region.

17. The electrode assembly according to claim 15, wherein the first electrode plate comprises the second winding start section beyond the winding head end of the second electrode plate; and
at least a portion of the second winding start section is located in the bending region.

18. The electrode assembly according to claim 17, wherein the second winding start section comprises a first portion, a second portion, and a third portion which are consecutively arranged, wherein the first portion comprises the winding head end of the first electrode plate, the third portion has a junction aligned with the winding head end of the second electrode plate, the third portion extends from the junction, and both the first portion and the third portion are located in the straight region, and the second portion is located in the bending region and configured to connect the first portion and the third portion.

19. The electrode assembly according to claim 18, wherein the second portion supports portions of the first electrode plate and the second electrode plate that are in the bending region and located outward of the second portion.

20. The electrode assembly according to claim 18 or 19, wherein the first electrode plate further comprises a unilateral reaction section continuously arranged with the third portion, the unilateral reaction section and the third portion are separated at the junction, and only an active substance layer on an outer surface of the unilateral reaction section is opposite to an active substance layer of the second electrode plate; and
at least a portion of the unilateral reaction section is stacked outward of the second winding start section, and there is no separator or second electrode plate between the second winding start section and the portion of the unilateral reaction section stacked outward of the second winding start section.

21. The electrode assembly according to claim 20, wherein the portion of the unilateral reaction section stacked outward of the second winding start section is in contact with the second winding start section.

22. The electrode assembly according to any one of claims 18 to 21, wherein the second electrode plate comprises a third winding start section extending from the winding head end of the second electrode plate, and the third winding start section is entirely located in the straight region; and in a thickness direction of the third winding start section, the third winding start section does not overlap with the first portion.

23. The electrode assembly according to claim 22, wherein in the first direction, the third winding start section is spaced apart from the first portion.

24. The electrode assembly according to claim 23, wherein in the first direction, a minimum distance between the third winding start section and the first portion is greater than or equal to a dimension of the first portion.

25. The electrode assembly according to claim 23 or 24, wherein in the first direction, a distance between the third winding start section and the first portion is L3, L3 being 5-20 mm.

26. The electrode assembly according to any one of claims 15 to 25, wherein the winding termination end of the first electrode plate is located in the bending region.

27. The electrode assembly according to claim 26, wherein the first electrode plate comprises the second winding tail section beyond the winding termination end of the second electrode plate, the second winding tail section comprising the winding termination end of the first electrode plate; and
the second winding tail section is entirely located in the bending region.

28. The electrode assembly according to claim 26 or 27, wherein the winding termination end of the second electrode plate is located in the bending region.

29. The electrode assembly according to any one of claims 15 to 28, wherein
the separator comprises the first winding tail section beyond the winding termination end of the second electrode plate, and the first winding tail section comprises the winding termination end of the separator; and
the electrode assembly further comprises a binding member, the binding member being connected to the separator and used for binding the first winding tail section.

30. The electrode assembly according to claim 29, wherein the first electrode plate comprises the second winding tail section beyond the winding termination end of the second electrode plate, the second winding tail section comprising the winding termination end of the first electrode plate;
the first winding tail section and the second winding tail section are located in the same bending region; and
one end of the binding member is located outward of and connected to the first winding tail section, and another end of the binding member exceeds the winding termination end of the first electrode plate and the winding termination end of the separator and is connected to the separator.

31. The electrode assembly according to claim 30, wherein the another end of the binding member is located in the straight region.

32. The electrode assembly according to claim 30, wherein the another end of the binding member is located in another of the bending regions.

33. The electrode assembly according to claim 31 or 32, further comprising an identification label, the identification label being disposed on a surface of the binding member facing away from the straight region.

34. The electrode assembly according to any one of claims 29 to 33, wherein the another end of the binding member exceeds a center line of the straight region, the center line being parallel to a winding axial direction of the electrode assembly.

35. The electrode assembly according to any one of claims 29 to 34, wherein two edges of the binding member both exceed the first electrode plate in the winding axial direction of the electrode assembly.

36. A battery cell, comprising a housing and the electrode assembly according to any one of claims 1 to 35, the electrode assembly being accommodated in the housing.

37. A battery comprising a plurality of battery cells according to claim 36.

38. An electric apparatus, comprising the battery according to claim 37, wherein the battery is configured to supply electrical energy.
